(19) Europäisches Patentamt
European Patent Office
Office européen des brevets

(11) EP 1 949 960 A1

(12) **EUROPEAN PATENT APPLICATION**
published in accordance with Art. 158(3) EPC

(43) Date of publication:
**30.07.2008 Bulletin 2008/31**

(21) Application number: **06821961.7**

(22) Date of filing: **19.10.2006**

(51) Int Cl.:
***B01J 23/755*** *(2006.01)* ***B01J 23/76*** *(2006.01)*
***B01J 35/10*** *(2006.01)* ***B01J 37/03*** *(2006.01)*
***C01B 3/40*** *(2006.01)* ***H01M 8/06*** *(2006.01)*

(86) International application number:
**PCT/JP2006/320835**

(87) International publication number:
**WO 2007/046462 (26.04.2007 Gazette 2007/17)**

(84) Designated Contracting States:
**DE GB**

(30) Priority: **19.10.2005 JP 2005304572**
**17.03.2006 JP 2006073746**

(71) Applicant: **KYOCERA CORPORATION**
**Kyoto-shi, Kyoto 612-8501 (JP)**

(72) Inventors:
- **SAGOU, Fumiaki**
**Kirishima-shi, Kagoshima 899-4312 (JP)**
- **TAKITA, Yusaku**
**Oita-shi, Oita 870-1192 (JP)**
- **NAGAOKA, Katsutoshi**
**Oita-shi, Oita 870-1192 (JP)**

(74) Representative: **HOFFMANN EITLE**
**Patent- und Rechtsanwälte**
**Arabellastrasse 4**
**81925 München (DE)**

# (54) CATALYST FOR HYDROGEN PRODUCTION, PROCESS FOR PRODUCING THE SAME, FUEL REFORMER, AND FUEL CELL

(57) There is provided a catalyst for producing hydrogen comprising a porous body, as a support, comprising either one of an amorphous phase oxide and a composite oxide containing titanium and zirconium in which titanium has a mol ratio of 5 to 75% and zirconium has a mol ratio of 25 to 95% to the sum of these two, the porous body having a micro-hole diameter distribution peak in the range of 3 nm to 30 nm; and catalytic active metal grains carried on the a gas contact surface of the support, and the catalytic active metal has a content of 1 to 30% by mass to the sum of the porous body and the catalytic active metal, and a method of manufacturing thereof. This suppresses sintering or coking causing activity deterioration, thereby minimizing reaction ratio variations with time. A fuel reformer having the above catalyst, and a fuel cell having the fuel reformer are also provided.

Fig. 1

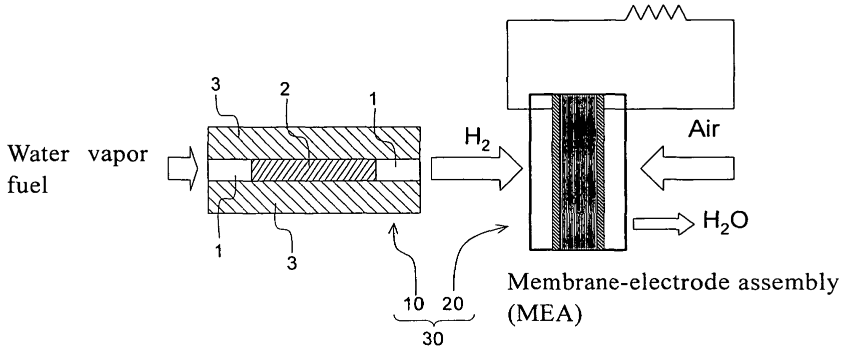


EP 1 949 960 A1

**Description**

TECHNICAL FIELD

The present invention relates to a catalyst for producing hydrogen used when hydrogen is produced from hydrocarbon compounds, such as methane, butane, propane, cyclohexane, decalin, kerosene, light oil, naphtha, gasoline and dimethyl ether, and biomass, as well as a method of manufacturing the catalyst for producing hydrogen. By having the catalyst carried on a flow passage such as a micro reactor, it can be used, for example, as the fuel reformer of a fuel cell.

BACKGROUND ART

Recently, the global warming due to gases having high global warming potentials such as $CO_2$ and PFC gas is a severe problem. In particular, the $CO_2$ includes much $CO_2$ gas exhausted from fossil fuel combustion, and hence some clean energy are desired which can be replaced with the fossil fuel. Under these circumstances, a fuel cell using hydrogen as fuel has recently entered into practical stage, attracting keen attention.

The methods of extracting hydrogen used in the fuel cell are being researched and developed. For example, there is the method of extracting hydrogen by reforming hydrocarbon compounds such as methane, butane, propane, cyclohexane, decalin, kerosene, light oil, naphtha, gasoline and dimethyl ether, or biomass, and the method of extracting hydrogen by the electrolysis of water and the photocatalyst. It will become very important for industrialization how efficiently hydrogen can be extracted from these hydrogen sources, and how stably hydrogen can be extracted while minimizing variations with time.

Under these circumstances, a large number of researches related to the hydrogen producing catalysts for extracting hydrogen are being made. The particular problems here are the deposition (coking) of carbon species during hydrogen production, and a remarkable deterioration of catalyst activity due to the sintering of a catalytic active metal for producing hydrogen.

To cope with these problems, Patent Document No. 1 describes, as a catalyst for producing hydrogen intended for eliminating carbon deposition, the catalyst obtained by forming a solid solution ofNi and Mg that is an alkali earth metal used as a support, and depositing Ni on the surface of Mg.

However, since in Patent Document No. 1 the calcining temperature of the solid solution is as high as 1000°C, its manufacturing steps require such a special facility as a furnace for high temperatures, increasing load such as electrical consumption. The abovementioned solid solution formation at the high temperature reduces the amount of metal Ni to be formed in the succeeding reduction process, failing to attain high activity.

On the other hand, in Patent Document No. 2, the sintering is suppressed by selecting Ni as an active metal of the catalyst for producing hydrogen, and forming a solid solution of Ni and one or more selected from Mg, Al, Zr, La and Cr, which is contained to prevent Ni from being sintered.

However, in Patent Document No. 2, the solid solution is formed with a different metal component, resulting in a deterioration of the activity of Ni used in the catalyst for producing hydrogen.

Patent Document No. 1: Japanese Unexamined Patent Publication No. 8-71421

Patent Document No. 2: Japanese Unexamined Patent Publication No. 3-245850

DISCLOSURE OF THE INVENTION

PROBLEMS TO BE SOLVED BY THE INVENTION

It is desirable to provide a catalyst for producing hydrogen and a manufacturing method thereof as well as a fuel reformer and a fuel cell, in which the active component of the catalyst suppresses sintering or coking contributing to a deterioration of activity, thereby minimizing reaction ratio variations with time.

MEANS FOR SOLVING THE PROBLEMS

The intensive research of the present inventors has led to the present invention based on the following new finding. That is, the active component of the catalyst for producing hydrogen suppresses sintering and coking contributing to a deterioration of activity, thereby minimizing reaction ratio variations with time, when a porous body (ceramics) composed of an amorphous phase oxide or a composite oxide containing titanium and zirconium at a specific mol ratio is used as a support, and a catalytic active metal is carried at a specific content on the gas contact surface of the support.

The catalyst for producing hydrogen of the invention uses as a support a porous body composed of an amorphous phase oxide or a composite oxide containing titanium and zirconium. Titanium has a mol ratio of 5 to 75%, and zirconium has a mol ratio of 25 to 95% to the sum of these two. The porous body has a micro-hole diameter distribution peak in the range of 3nm to 30nm. The support carries on a gas contact surface thereof catalytic active metal grains, and the catalytic active metal has a content of 1 to 30% by mass to the sum of the porous body and the catalytic active metal.

The method of manufacturing the catalyst for producing hydrogen of the invention includes the steps of: (i) obtaining a mixed solution by mixing metal alkoxide of titanium and metal alkoxide of zirconium together with solvent; (ii) preparing a precursor sol (A) in which the metal components of the added metal alkoxide of titanium and the metal alkoxide of zirconium are partially solated by hydrolyzing the mixed solution by adding a hydrolytic catalyst and water to the mixed solution; (iii) adding metal salt serving as an active component of a catalyst for producing hydrogen to the mixed solution containing the precursor sol (A); (iv) preparing a precursor sol (B) having, as sol, the remaining metal components of the added metal alkoxide of titanium and the metal alkoxide of zirconium by hydrolyzing the mixed solution by further adding water to the mixed solution; and (v) drying the precursor sol (B), followed by heat treatment in an oxidizing atmosphere and then heat treatment in a reducing atmosphere.

The method of manufacturing the catalyst for producing hydrogen of other embodiment of the invention further includes the step of preparing a precursor sol (C) having, as sol, the remaining metal components of the added metal alkoxide of titanium and the metal alkoxide of zirconium by hydrolyzing the mixed solution by further adding water to the mixed solution containing the above precursor sol (A); the step of adding metal salt serving as an active component of the catalyst for producing hydrogen to the precursor sol (C) so as to be carried thereon; and the step of drying the precursor sol (C), followed by heat treatment in an oxidizing atmosphere and then heat treatment in a reducing atmosphere.

The method of manufacturing the catalyst for producing hydrogen of still other embodiment of the invention further includes the step of preparing a support by drying the above precursor sol (C), followed by heat treatment in an oxidizing atmosphere; and the step of immersing the support in a metal salt solution serving as an active component of the catalyst for producing hydrogen, followed by heat treatment in an oxidizing atmosphere and then heat treatment in a reducing atmosphere.

The fuel reformer of the invention has the above catalyst for producing hydrogen.
The fuel cell of the invention has the above fuel reformer.

## EFFECT OF THE INVENTION

The catalyst for producing hydrogen of the invention is the catalyst having a long life, whose reaction ratio variations with time is minimized by suppressing sintering and coking. Hence, the invention enables stable hydrogen production over a long period of time. High activity is attainable in, for example, the steam reforming and the auto-thermal reaction of hydrocarbons. That is, according to the half width measurement of X-ray diffraction method (XRD), the grain size of the active metal grains of the catalyst for producing hydrogen was 45nm or less, which is identical with the logical effect resulting from the grain size thereof. This proves that the catalyst for producing hydrogen of the invention achieves high activity.

## BRIEF DESCRIPTION OF THE DRAWINGS

Fig. 1 is a schematic explanatory drawing showing an example of a fuel cell according to the present invention.

## PREFERRED EMBODIMENTS FOR CARRYING OUT THE INVENTION

### Catalyst for Producing Hydrogen

The catalyst for producing hydrogen of the invention uses a specific porous body as a support. A specific content of catalytic active metal grains are carried on the gas contact surface of the support. Specifically, titanium and zirconium are contained, and the mol ratio of titanium is 5 to 75%, and the mol ratio of zirconium is 25 to 95% to the sum of these two. This ensures stable achievement of high activity as a catalyst, whose reaction efficiency is 85% or more. On the other hand, when the contents of titania and zirconia are above the upper limit of their respective mol ratio, or below the lower limit of their respective mol ratio, the crystal phase ratio of either single oxide is increased and therefore the specific surface area is lowered, resulting in a deterioration of activity.

A high specific surface area can be attained by transforming the oxides into an amorphous phase oxide or a composite oxide of titanium and zirconium. It is conjectured that these oxides constitute a steric hindrance to suppress the oxide crystallization of their respective counterparts. By transforming the oxides into a composite oxide of titanium and zirconium, acid site and base site are changed, and nickel crystal diameter is reduced. As a result, the quantity of coking of carbon is reduced.

The support of the porous body has a micro-hole diameter distribution peak in the range of 3nm to 30nm. This enables the porous body having a high specific surface area, improving the dispersibility of the catalytic active metal grains. Since the micro-hole walls can also be used as a reaction field, it can be expected to improve catalytic activity. On the other hand, when the micro-hole diameter distribution is below 3nm, the reaction gas is hard to diffuse into the micro holes, leading to diffusion controlled reaction. Above 30nm, the specific surface area of the catalyst becomes small, reducing the effect of porosity.

As used here, the micro-hole diameter distribution can be expressed by a graph whose X-axis represents micro-hole diameter and Y-axis represents micro-hole volume obtained by adsorption process using nitrogen gas and argon gas, mercury intrusion technique, X-ray small angle scattering method, or capillary condensation method using solvent such as water and hexane. Any special limitation is not imposed on the measuring instrument as long as it can measure the micro-hole distribution range of 3 to 30nm in samples to be measured.

The catalytic active metal to be carried on the gas contact surface of the abovementioned porous support is as follows. That is, the content of a catalytic active metal to the sum of the porous body and the catalytic active metal is 1 to 30% by mass. This achieves suitable activity. When the catalytic active metal is below 1% by mass, sufficient activity cannot be obtained. Above 30% by mass, the sintering of the catalytic active metal will occur, and the degree of metal exposure will be lowered, resulting in a deterioration of activity. Further, the ratio of the support to the metal boundary surface will be lowered, causing vigorous carbon deposition.

The term "the gas contact surface of the porous support" means the surface that can be brought into direct contact with gas to be supplied, and corresponds to both of the outer surface of the porous support and the micro-hole surface not constituting any close space.

The catalytic active metal is preferably granular and has a grain size of 45nm or less. This increases the exposed part of the catalytic active metal and increases the ratio of the support - the metal boundary surface, thereby achieving high activity and high carbon deposition suppressing capability. The above grain size is the value obtained from the half width measurement of XRD.

The above catalytic active metal is preferably nickel. This enables provision of the inexpensive and high performance catalyst capable of suitably extracting hydrogen from hydrocarbons by means of steam reforming, partial oxidation reaction, or auto-thermal reaction.

Alternatively, the catalyst for producing hydrogen of the invention may contain a specific mol ratio of a rare earth element in the abovementioned porous body. The containing (adding) the rare earth element is for suppressing the carbon deposition (coking).

Specifically, the porous body preferably contains 0.1 to 100.0% of a rare earth element in mol ratio to the catalytic active metal. This enables suppression of carbon deposition without adversely affecting catalytic activity.

The rare earth element is preferably at least one kind selected from Y, La, Ce and Pr. These illustrated elements can particularly accelerate activation of oxidizing gas ($H_2O$, $O_2$, and $CO_2$), so that the carbon precursor on the metal can be efficiently removed from the catalyst.

The catalyst for producing hydrogen of the invention may contain a specific mol ratio of silicon in the abovementioned porous body. Similarly to the above other catalyst for producing hydrogen, the containing (adding) the rare earth element is for suppressing carbon deposition (coking).

Specifically, the porous body preferably contains 0.5 to 20.0% of silicon in mol ratio to the sum of the titanium and the zirconium. This enables suppression of carbon deposition - without causing a considerable drop of catalytic activity. As the specific surface area is increased by adding silicon to the support, the crystallize size ofNi is reduced, thereby achieving stable activity. This also seems to exert influence on the suppression of carbon deposition. On the other hand, when the content (the amount of addition) is below 0.5%, the effect of suppressing carbon deposition is reduced. Above 20.0%, the catalytic active metal will be oxidized during reaction, resulting in a deterioration of activity.

Manufacturing Method

The method of manufacturing the catalyst for producing hydrogen according to the invention will be described in detail.

Firstly, a mixed solution is obtained by mixing metal alkoxide of titanium and metal alkoxide of zirconium together with solvent. Examples of the metal alkoxide of titanium include tetramethoxy titanium, tetraethoxy titanium, tetra-i-propoxy titanium (titanium tetraisopropoxide), tetra-n-propoxy titanium, tetra-i-butoxy titanium, tetra-n-butoxy titanium, tetra-sec-butoxy titanium and tetra-t-butoxy titanium.

Examples of the metal alkoxide of zirconium include tetramethoxy zirconium, tetraethoxy zirconium, tetra-i-propoxy zirconium, tetra-n-propoxy zirconium, tetra-i-butoxy zirconium, tetra-n-butoxy zirconium (zirconium tetranormalbutoxide), tetra-sec-butoxy zirconium and tetra-t-butoxy zirconium.

As the solvent, alcohols such as methanol, ethanol, propanol, butanol, 2-methoxyethanol and 2-etoxyethanol can be used suitably. Among others, a lower alcohol having about 1 to 5 carbon atoms, such as methanol or ethanol, is most suitable from the viewpoints of the solubility of the alkoxide and the easy dry when solvent is removed by evaporation.

Subsequently, water for hydrolysis is added to the mixed solution obtained above. The amount of addition of the water is preferably not more than 40% by mass to the total amount of the water for hydrolysis. That is, the total amount of the water for hydrolysis to be added to the mixed solution is the sum of the added water required in the synthesis step for preparing sol. The addition of the water is preferably carried out in two steps. This is because when all of the water is added at a time, the hydrolysis will be advanced locally, causing the non-uniform sol grain size. Therefore, the water is added in two steps consisting of the first step of adding not more than 40% by mass, preferably not more than 20% by mass, where no locally rapid hydrolysis occurs, and the second step of adding the remaining water.

It is necessary to perform hydrolysis by adding the water for hydrolysis together with a hydrolytic catalyst. This produces a precursor sol (A) in which the metal components of the added metal alkoxide of titanium and the metal alkoxide of zirconium are partially solated. Specifically, the hydrolysis is carried out by adding water of not more than 40% by mass of the total amount of water and the hydrolytic catalyst to the above mixed solution. That is, the precursor sol (A) is prepared by the hydrolysis of the mixed solution by adding the water together with the hydrolytic catalyst such as an acid described below. The amount of addition of the water is preferably not more than 40% by mass of the total amount of the water, as described above, so as to permit a partial hydrolysis. The reason for this is as follows. That is, alkoxide of titania and zirconia have a high hydrolysis rate, and when the amount of addition of the water is larger than 40% by mass of the total amount of the water, the hydrolysis is advanced rapidly, and precipitation and the like occur, failing to obtain stable sol. As a result, the composition distribution of the composite oxide is liable to become non-uniform. Further, the precursor sol (A) to be prepared has a large grain size, reducing the specific surface area when it becomes a porous body. On the other hand, the hydrolysis of alkoxide can be partially advanced by setting the amount of addition of the water to not more than 40% by mass of the total amount of water. As a result, the partially hydrolyzed part can be reacted with other alkoxide, thereby improving the homogeneity of the composition in the solution.

The hydrolytic catalyst is preferably at least one kind selected from nitric acid, hydrochloric acid, acetic acid, sulfuric acid, hydrofluoric acid and ammonia. These illustrated catalysts can accelerate hydrolysis. Among others, nitric acid can be used suitably which has sufficient activity and leaves less residual component after burning.

Subsequently, metal salt serving as an active component of the catalyst for producing hydrogen is added to the mixed solution containing the precursor sol (A). That is, by adding the metal salt serving as the catalytic active metal to the precursor sol (A), it can be expected that the metal salt can be uniformly mixed into the sol (A), and the catalytic active metal can be uniformly dispersed into the porous body.

Examples of the metal salt include nickel nitrate, nickel sulfate, nickel acetate, nickel acetyl acetonato, nickel chloride, nickel citrate, nickel bromide and nickel carbonate. Among others, at least one kind selected from nickel nitrate, nickel acetate and nickel acetyl acetonato is preferred which can be dissolved in the solvent as well as under the heat-treated condition, and can be purchased at low cost.

Subsequently, a precursor sol (B) having, as sol, the remaining metal components of the metal alkoxide of titanium and the metal alkoxide of zirconium is prepared by hydrolysis being carried out by further adding water, namely the rest of the water for hydrolysis to the mixed solution of metal salt and the precursor sol (A). That is, the addition of the remaining water causes the non-reacted alkyl groups to be hydrolyzed, thereby completing the hydrolysis of the alkoxides. This enables suppression of sol grain size variations with time due to the hydrolysis reaction with the water vapor in the atmosphere. The water is added in the range of 2 to 8 mol, preferably 3 to 5 mol in consideration of the sol grain size, as compared with 2 mol of the sum of the alkoxides. This is because when a large amount of water is added, the sol grain size tends to become large, contributing to a deterioration of BET specific surface area.

Finally, the precursor sol (B) is dried and heat treated in an oxidizing atmosphere and then heat treated in a reducing atmosphere, thereby obtaining the catalyst for producing hydrogen. Specifically, the drying the precursor sol (B) is for removing the solvent so as to prepare powder as the origin of the support. The drying is preferably carried out in the temperature range from 100 to 200°C, at which the solvent such as alcohol and water can be removed. No limitation is imposed on the drying method as long as the solvent can be removed. For example, any method of heating by a hot stirrer, drying by an oven, and evaporator may be employed.

After the above drying, heat treatment is carried out in the oxidizing atmosphere. Preferably, burning is carried out in the atmosphere at a temperature of 400 to 1000°C, preferably 500 to 800°C. The burning under these conditions removes excessive carbon component and advances the condensation polymerization of the alkoxides, thereby advancing the support networking.

Subsequently, heat treatment is carried out in the reducing atmosphere. Since the catalytic active metal grains after the burning in the atmosphere are present in the oxidized state, reduction process is needed to bring them into the metal state. In the reduction process, reducing gases such as $H_2$, CO and hydrocarbon can be used, and $H_2$ gas is preferred for further enhancing reducing property. The reduction temperature is 500 to 900°C, preferably 550 to 800°C. Below 500°C, the reduction process cannot be carried out sufficiently. Above 900°C, the reduction process can be carried out sufficiently, whereas the sintering of the catalytic active metal grains will occur. As a result, the activity of the catalyst for producing hydrogen might be deteriorated.

Next, the method of manufacturing the catalyst for producing hydrogen according to other embodiment of the invention will be described in detail. In this manufacturing method, after a precursor sol (A) is prepared similarly to the abovementioned method, a precursor sol (C) is prepared by terminating the hydrolysis by further adding water, without adding metal salt serving as the active component of the catalyst for producing hydrogen. The metal salt is then added to a mixed solution containing the precursor sol (C).

Specifically, the precursor sol (A) is prepared similarly to the above method. Then, firstly, hydrolysis is carried out by further adding water, namely the remaining water for the hydrolysis to the mixed solution containing the precursor sol (A), thereby preparing the precursor sol (C) having, as sol, the remaining metal components of the added metal alkoxide of titanium and the metal alkoxide of zirconium.

Subsequently, metal salt serving as an active component of the catalyst for producing hydrogen is added to and carried on the precursor sol (C). That is, by adding the metal salt serving the active component of the catalyst for producing hydrogen to the precursor sol (C), although the uniform dispersibility is slightly lowered than the case of adding it to the precursor sol (A), the metal salt can be mixed relatively uniformly. Since the precursor sol (C) becomes the sol in which the hydrolysis is terminated, there is some catalytic active metal to be entered into the porous interior when the metal salt is added to the precursor sol (A). On the other hand, by adding the metal salt to the precursor sol (C), the catalytic active metal can be exposed on the surface of the porous body.

Finally, similarly to the above method, the precursor sol (C) is dried and heat treated in an oxidizing atmosphere and then heat treated in a reducing atmosphere, thereby obtaining the catalyst for producing hydrogen.

Next, the method of manufacturing the catalyst for producing hydrogen according to still other embodiment of the invention will be described in detail. In this manufacturing method, after a precursor sol (C) is prepared similarly to the abovementioned other method, a support is obtained by heat treating the precursor sol (C). The support is then immersed in a metal salt solution so that catalytic active metal grains are carried only on the surface of the support of a porous body.

Specifically, in the still other method of manufacturing the catalyst for producing hydrogen, firstly, a precursor sol (C) prepared similarly to the above other method is dried and then heat treated in an oxidizing atmosphere so as to prepare a support. The obtained support is then immersed in solvent such as water or alcohol, containing metal salt serving as an active component of the catalyst for producing hydrogen. Similarly to the above method, this is dried and heat treated in an oxidizing atmosphere and then heat treated in a reducing atmosphere, thereby obtaining the catalyst for producing hydrogen. Thus, after the porous body is prepared as the catalyst support, the metal salt is immersed therein, enabling the catalytic active metal grains to be carried only on the surface of the porous body. Although the metal grain size is relatively larger than that in the foregoing methods, there is the advantage that the metal is susceptible to reduction reaction and hence the reduction temperature can be lowered.

Alternatively, a rare earth element may be added to the mixed solution. This enables suppression of carbon deposition. Specifically, the amount of addition of the rare earth element is preferably 0.1 to 100.0% in mol ratio with respect to the catalytic active metal grains. Thus, carbon deposition can be suppressed without adversely affecting catalytic activity. When the amount of its addition is below 0.1 %, the effect of suppressing carbon deposition might be reduced. Above 100.0%, activity might be deteriorated by the rare earth element covering the exposed surfaces of the catalytic active metal grains.

The rare earth element may be added after preparing the precursor sol (A) in the catalyst manufacturing steps, and no limitation on the timing of addition is imposed as long as the effect of suppressing carbon deposition can be recognized. However, in consideration of the easiness of manufacturing, the rare earth element is preferably added at the same timing as the catalytic active metal salt. The rare earth element source may be of alcohol soluble type. In view of the easiness of manufacturing, it is preferable to use salts such as nitrate, acetate, oxalate, carbonate and chloride, or sol.

Alternatively, silicon may be added to the precursor sol (B) or the precursor sol (C). This enables suppression of carbon deposition. Specifically, the amount of addition of silicon is preferably 0.5 to 20.0% in mol ratio to the sum of titanium and zirconium. Thus, carbon deposition can be suppressed without adversely affecting catalytic activity. On the other hand, when the amount of its addition is below 0.5%, the effect of suppressing carbon deposition might be reduced. Above 20.0%, the active metal is susceptible to oxidation reaction, and therefore the stability of activity might be deteriorated.

Preferably, silicon is added after preparing the precursor sol (A) or (C) in the catalyst manufacturing steps. That is, no adverse effect is exerted on the crystal structures of titanium and zirconium by adding silicon after firstly preparing the composite oxide of titania and zirconia, which constitutes a base structure. Further, silicon can be highly dispersed by adding it in the solution state thereof. Silicon may be added at either timing of after preparing the precursor sol (A) or (C), and no large adverse effect is exerted on the characteristics of the catalyst manufactured.

As the type of the silicon source, generally and widely used tetraalkoxy silane, such as tetraethoxy silane, tetramethoxy silane, tetra-n-propoxy silane, can be used suitably.

The catalyst for producing hydrogen according to the invention as described above can be used in the catalyst for producing hydrogen which can efficiently and stably extract hydrogen, minimizing variations with time, from hydrocarbon compounds, such as methane, butane, propane, cyclohexane, decalin, kerosene, light oil, naphtha, gasoline and dimethyl ether, and biomass. Consequently, the catalyst for producing hydrogen of the invention can be used in a wide variety of industrial applications such as the fuel cell industry employing hydrogen as fuel, regarding it as a clean energy replaced with fossil fuel, and the effective use in NOX, SOX and freon gas decomposition. The followings are the cases where the catalyst for producing hydrogen of the invention is applied to a fuel reformer and a fuel cell. The use of the catalyst for producing hydrogen of the invention is not limited to these.

Fuel Reformer and Fuel Cell

The fuel reformer of the invention is provided with the catalyst for producing hydrogen of the invention. The fuel cell is provided with the fuel reformer. The fuel reformer and the fuel cell according to the invention will be described in detail with reference to the drawing. Fig. 1 is a schematic explanatory drawing showing an example of the fuel cell according to the invention.

As shown in Fig. 1, a fuel reformer 10 has a substrate composed of ceramics, glass, Si or metal, and a flow passage to permit passage of gas (a reaction tube 1) in the substrate. A catalyst 2 is carried in the thin film state thereof, or alternatively filled in the shape of a pellet in the flow passage. The abovementioned catalyst for producing hydrogen of the invention is applied to the catalyst 2. This enables hydrogen to be extracted stably.

In the flow passage, a resistor of tungsten or the like (a heater 3) is mounted on the substrate so that a reaction gas is heated and brought into contact with the catalyst 2. Alternatively, a fuel cell 30 can be constructed by connecting a reaction gas outlet to an electrolyte membrane (membrane-electrode assembly (MEA)) 20 having an electrode catalyst such as Pt. The electrolyte membrane 20 is composed of fluorine-based solid polymer, $ZrO_2$-based or perovskite type solid oxide, or the like.

The present invention will be further described in detail, based on the following examples, which are cited by way of example and without limitation.

**Example 1**

Tables 1-1 and 1-2, Tables 2-1 and 2-2, Table 3 and Table 4 summarize some samples selected from the manufactured catalysts for producing hydrogen, respectively. Specifically, the abscissa of Tables 1-1 and 1-2 represents the catalyst composition, characteristics, the degree of exposure of the active metal of the catalyst for producing hydrogen against the gas contact surface, and the effect when used for producing hydrogen. Tables 2-1 and 2-2, Table 3 and Table 4 summarize the manufacturing method. The abscissa of these tables represents sequentially the manufacturing steps.

[Table 1-1]

| Sample No.[1)] | Catalyst | | | | | | | | |
|---|---|---|---|---|---|---|---|---|---|
| | Oxide of titanium and zirconium, and composite oxide of them | | | Composition of porous support side | | Added element of rare earth and silicon | | Micro-hole diameter distribution (Micro-hole and grain boundary) | BET specific surface area [$m^2/g$] |
| | Titanium oxide ($TiO_2$) | $ZrTiO_4$ | Zirconium oxide ($ZrO_2$) | Mol ratio of titanium | Mol ratio of zirconium | kinds | Content (mol %) | nm | |
| | Crystal system | Crystal system | Crystal system | | | | | | |
| 1 | - | Crystal phase | - | 50mol % | 50mol% | None | - | 13.8 | 78.4 |
| 2 | - | Amorphous | - | 50mol % | 50mol % | None | - | 4.8 | 124.1 |
| 3 | - | Crystal phase | Crystal phase | 5mol % | 95mol % | None | - | 14.1 | 37.3 |
| 4 | Crystal phase | Crystal phase | - | 75mol % | 25mol % | None | - | 18.1 | 34.2 |
| *5 | Crystal phase | Crystal phase | - | 90mol % | 10mol % | None | - | 18.3 | 15.1 |
| *6 | - | - | Crystal phase | 0mol % | 100mol % | None | - | 18.4 | 27.7 |
| *7 | Crystal phase | - | - | 100mol % | 0mol % | None | - | 20.2 | 6.4 |
| 8 | - | Crystal phase | - | 50mol % | 50mol % | Y | 5 | 13.8 | 78.1 |
| 9 | - | Crystal phase | - | 50mol % | 50mol% | La | 5 | 13.8 | 76.7 |
| 10 | - | Crystal phase | - | 50mol % | 50mol % | Ce | 5 | 13.9 | 77.1 |
| 11 | - | Crystal phase | - | 50mol % | 50mol % | Pr | 5 | 13.9 | 75.4 |

(continued)

| Sample No.[1)] | Catalyst | | | | | | | | |
|---|---|---|---|---|---|---|---|---|---|
| | Oxide of titanium and zirconium, and composite oxide of them | | | Composition of porous support side | | Added element of rare earth and silicon | | Micro-hole diameter distribution (Micro-hole and grain boundary) | BET specific surface area [$m^2/g$] |
| | Titanium oxide ($TiO_2$) | $ZrTiO_4$ | Zirconium oxide ($ZrO_2$) | Mol ratio of titanium | Mol ratio of zirconium | kinds | Content (mol %) | nm | |
| | Crystal system | Crystal system | Crystal system | | | | | | |
| 12 | - | Crystal phase | - | 50mol % | 50mol % | Y,La | 5 | 13.7 | 77.7 |
| 13 | - | Crystal phase | - | 50mol % | 50mol % | Ce | 100 | 14.0 | 38.9 |
| 14 | - | Crystal phase | - | 50mol % | 50mol % | Ce | 200 | 13.9 | 11.7 |
| 15 | - | Crystal phase | - | 50mol % | 50mol % | Ce | 0.5 | 13.8 | 78.1 |
| 16 | - | Crystal phase | - | 50mol % | 50mol % | Ce | 0.1 | 13.8 | 77.9 |
| 17 | - | Crystal phase | - | 50mol % | 50mol % | None | - | 21.5 | 41.3 |
| *18 | - | Crystal phase | - | 50mol % | 50mal % | None | - | no peak | <2 |
| 19 | - | Crystal phase | - | 50mol % | 50mol % | None | - | 12.9 | 82.1 |
| 20 | - | Crystal phase | - | 50mol % | 50mol % | None | - | 8.1 | 107.7 |
| 21 | - | Crystal phase | - | 50mol % | 50mol % | None | - | 13.7 | 58.1 |

(continued)

| Sample No.[1)] | Catalyst | | | | | | | | |
|---|---|---|---|---|---|---|---|---|---|
| | Oxide of titanium and zirconium, and composite oxide of them | | | Composition of porous support side | | Added element of rare earth and silicon | | Micro-hole diameter distribution (Micro-hole and grain boundary) | BET specific surface area $[m^2/g]$ |
| | Titanium oxide ($TiO_2$) | $ZrTiO_4$ | Zirconium oxide ($ZrO_2$) | Mol ratio of titanium | Mol ratio of zirconium | kinds | Content (mol %) | nm | |
| | Crystal system | Crystal system | Crystal system | | | | | | |
| 22 | - | Crystal phase | - | 50mol % | 50mol % | None | - | 13.2 | 64.3 |
| *23 | - | Crystal phase | - | 50mol % | 50mol % | None | - | 31.1 | 25.7 |
| *24 | - | Crystal phase | - | 50mol% | 50mol % | None | - | 5.5 | 217.6 |
| 25 | - | Crystal phase | - | 50mol % | 50mol % | None | - | 8.7 | 70.1 |
| 26 | - | Crystal phase | - | 50mol % | 50mol % | None | - | 17.9 | 93.9 |
| *27 | - | Crystal phase | - | 50mol % | 50mol % | None | - | 4.1 | 66.9 |
| *28 | - | Crystal phase | - | 50mol % | 50mol % | None | - | 22.1 | 128.1 |
| 29 | - | Crystal phase | - | 50mol % | 50mol % | Si | 0.1 | 13.8 | 130 |
| 30 | - | Crystal phase | - | 50mol % | 50mol % | Si | 0.5 | 12.1 | 138.4 |
| 31 | - | Crystal phase | - | 50mol % | 50mol % | Si | 5 | 9.2 | 166.4 |

(continued)

| Sample No.[1)] | Catalyst | | | | | | | | |
|---|---|---|---|---|---|---|---|---|---|
| | Oxide of titanium and zirconium, and composite oxide of them | | | Composition of porous support side | | Added element of rare earth and silicon | | Micro-hole diameter distribution (Micro-hole and grain boundary) | BET specific surface area [$m^2/g$] |
| | Titanium oxide ($TiO_2$) | $ZrTiO_4$ | Zirconium oxide ($ZrO_2$) | Mol ratio of titanium | Mol ratio of zirconium | kinds | Content (mol %) | nm | |
| | Crystal system | Crystal system | Crystal system | | | | | | |
| 32 | - | Crystal phase | - | 50mol % | 50mol % | Si | 5 | 8.9 | 161.3 |
| 33 | - | Crystal phase | - | 50mol % | 50mol % | Si | 20 | 3.6 | 205.3 |
| *34 | - | Crystal phase | - | 50mo1 % | 50mol % | Si | 30 | 2.6 | 313.5 |

1) The samples marked "*" are out of the scope of the present invention.

[Table 1-2]

| Sample No.[1)] | Catalyst | | | | Effect | | Carbon deposition ratio (Amount of carbon deposition / amount of catalyst) | Manufacturing methods |
|---|---|---|---|---|---|---|---|---|
| | Active metal on surface section (Ni) | | | | Conversion ratio of n-butane | The rate of change (Comparing activity of 1hr. later to 10 hrs. later from reaction start) | | |
| | Kinds | Amount of addition of active metal (Amount of active metal / Amount of catalyst) | Grain size (nm) | Ratio of degrees of exposure (Ratio of a% to b%) | | | | |
| 1 | Ni | 15wt% | 6.9 | 0 | 98.4 | 0.54% | 6.4% | 1 |
| 2 | Ni | 15wt% | | 0 | 99.2 | 0.61% | 5.9% | 11 |
| 3 | Ni | 15wt% | 10.2 | 0 | 90.2 | 0.48% | 10.4% | 12 |
| 4 | Ni | 15wt% | 28.5 | 0 | 81.0 | 0.99% | 27.1% | 13 |
| *5 | Ni | 15wt% | 31.8 | 0 | 69.5 | 0.71% | 28.5% | 14 |
| *6 | Ni | 15wt% | 14.9 | 0 | 88.9 | 0.95% | 13.2% | 15 |
| *7 | Ni | 15wt% | 46.3 | 0 | 58.7 | 11.80% | 22.2% | 16 |
| 8 | Ni | 15wt% | 7.1 | 0 | 97.5 | 0.12% | 3.2% | 2 |
| 9 | Ni | 15wt% | 6.8 | 0 | 96.7 | 0.11% | 3.1% | 3 |
| 10 | Ni | 15wt% | 7.2 | 0 | 98.2 | 0.15% | 3.0% | 4 |
| 11 | Ni | 15wt% | 6.9 | 0 | 98.5 | 0.14% | 2.9% | 5 |
| 12 | Ni | 15wt% | 7.0 | 0 | 97.4 | 0.08% | 3.3% | 6 |
| 13 | Ni | 15wt% | 7.8 | 0 | 80.9 | 0.23% | 0.7% | 7 |
| 14 | Ni | 15wt% | 19.3 | 0 | 13.6 | 0.12% | 0.3% | 8 |
| 15 | Ni | 15wt% | 7.2 | 0 | 98.3 | 0.29% | 4.0% | 9 |
| 16 | Ni | 15wt% | 6.9 | 0 | 99.1 | 0.51% | 4.6% | 10 |
| 17 | Ni | 15wt% | 31.4 | 0 | 86.9 | 0.81% | 5.2% | 17 |
| *18 | Ni | 15wt% | 61.2 | 1.2 | 7.1 | 7.40% | 0.2% | 18 |
| 19 | Ni | 15wt% | 8.2 | 0 | 98.6 | 0.56% | 5.7% | 22 |

(continued)

| Sample No.[1)] | Catalyst | | | | Effect | | | |
|---|---|---|---|---|---|---|---|---|
| | Active metal on surface section (Ni) | | | | Conversion ratio of n-butane | The rate of change (Comparing activity of 1hr. later to 10 hrs. later from reaction start) | Carbon deposition ratio (Amount of carbon deposition / amount of catalyst) | Manufacturing methods |
| | Kinds | Amount of addition of active metal (Amount of active metal / Amount of catalyst) | Grain size (nm) | Ratio of degrees of exposure (Ratio of a% to b%) | | | | |
| 20 | Ni | 15wt% | 13.5 | 0 | 97.5 | 0.66% | 5.8% | 23 |
| 21 | Ni | 15wt% | 18.9 | 0 | 95.5 | 0.66% | 5.5% | 19 |
| 22 | Ni | 15wt% | 16.4 | 0 | 96.4 | 0.67% | 6.0% | 20 |
| *23 | Ni | 15wt% | 46.1 | 0 | 75.8 | 11.76% | 3.4% | 21 |
| *24 | No additions | 0wt% | - | - | 0.0 | 0.00% | 0.0% | 24 |
| 25 | Ni | 30wt% | 11.4 | 0 | 97.7 | 1.02% | 26.1% | 25 |
| 26 | Ni | 1wt% | - | 0 | 1.5 | 0.28% | 0.0% | 26 |
| *27 | Ni | 40wt% | 31.1 | 0 | 78.2 | - | 69.3% | 27 |
| *28 | Ni | 0.5wt% | - | 0 | 0.0 | 0.00% | 0.0% | 28 |
| 29 | Ni | 15wt% | 6.8 | 0 | 97.8 | 0.50% | 4.6% | 29 |
| 30 | Ni | 15wt% | 6.8 | 0 | 98.1 | 0.66% | 0.9% | 30 |
| 31 | Ni | 15wt% | 6.4 | 0 | 94.3 | 0.44% | 0.4% | 31 |
| 32 | Ni | 15wt% | 6.1 | 0 | 95.5 | 0.32% | 0.4% | 32 |
| 33 | Ni | 15wt% | 5.5 | 0 | 91.1 | 0.39% | 0.3% | 33 |
| *34 | Ni | 15wt% | 4.3 | 0 | 83.8 | 19.90% | 0.2% | 34 |

1) The samples marked "*" are out of the scope of the present invention.

[Table 2-1]

Table 2-1 Catalyst preperation
Method of manufacturing catalyst (1)

| Manufacturing method | Preparing mixed solution of metal alkoxide of titanium and zirconium (Amount of mixture) | | | Producing of first precursor sol (A) | | Addition of silicon | | Addition of catalytic active metal salt | |
|---|---|---|---|---|---|---|---|---|---|
| | | | Solvent | First hydrolysis | | | | | |
| | Metal alkoxide of titanium | Metal alkoxide of zirconium | Amount of mixture and kinds | Catalyst to be used (Acidic or basic) | Amount of addition of water (mol) | Kinds of silicon | Amount of addition (mol) | Kinds of metal salts | Amount of addition (mol) |
| 1 | 1 | 1 | 100(Ethanol) | 0.14 (Nitric acid) | 0.5 | - | - | Nickel nitrate | 0.611 |
| 2 | 1 | 1 | 100(Ethanol) | 0.14 (Nitric acid) | 0.5 | - | - | Nickel nitrate | 0.611 |
| 3 | 1 | 1 | 100(Ethanol) | 0.14 (Nitric acid) | 0.5 | - | - | Nickel nitrate | 0.611 |
| 4 | 1 | 1 | 100(Ethanol) | 0.14 (Nitric acid) | 0.5 | - | - | Nickel nitrate | 0.611 |
| 5 | 1 | 1 | 100(Ethanol) | 0.14 (Nitric acid) | 0.5 | - | - | Nickel nitrate | 0.611 |
| 6 | 1 | 1 | 100(Ethanol) | 0.14 (Nitric acid) | 0.5 | - | - | Nickel nitrate | 0.611 |
| 7 | 1 | 1 | 100(Ethanol) | 0.14 (Nitric acid) | 0.5 | - | - | Nickel nitrate | 0.611 |
| 8 | 1 | 1 | 100(Ethanol) | 0.14 (Nitric acid) | 0.5 | - | - | Nickel nitrate | 0.611 |
| 9 | 1 | 1 | 100(Ethanol) | 0.14 (Nitric acid) | 0.5 | - | - | Nickel nitrate | 0.611 |
| 10 | 1 | 1 | 100(Ethanol) | 0.14 (Nitric acid) | 0.5 | - | - | Nickel nitrate | 0.611 |

(continued)

Table 2-1 Catalyst preperation
Method of manufacturing catalyst (1)

| Manufacturing method | Preparing mixed solution of metal alkoxide of titanium and zirconium (Amount of mixture) | | | Producing of first precursor sol (A) | | Addition of silicon | | Addition of catalytic active metal salt | |
|---|---|---|---|---|---|---|---|---|---|
| | | | Solvent | First hydrolysis | | | | | |
| | Metal alkoxide of titanium | Metal alkoxide of zirconium | Amount of mixture and kinds | Catalyst to be used (Acidic or basic) | Amount of addition of water (mol) | Kinds of silicon | Amount of addition (mol) | Kinds of metal salts | Amount of addition (mol) |
| 11 | 1 | 1 | 100(Ethanol) | 0.14 (Nitric acid) | 0.5 | - | - | Nickel nitrate | 0.611 |
| 12 | 0.1 | 1.9 | 100(Ethanol) | 0.14 (Nitric acid) | 0.5 | - | - | Nickel nitrate | 0.611 |
| 13 | 1.5 | 0.5 | 100(Ethanol) | 0.14 (Nitric acid) | 0.5 | - | - | Nickel nitrate | 0.611 |
| 14 | 1.8 | 0.2 | 100(Ethanol) | 0.14 (Nitric acid) | 0.5 | - | - | Nickel nitrate | 0.611 |
| 15 | 0 | 2 | 100(Ethanol) | 0.14 (Nitric acid) | 0.5 | - | - | Nickel nitrate | 0.611 |
| 16 | 2 | 0 | 100(Ethanol) | 0.14 (Nitric acid) | 0.5 | - | - | Nickel nitrate | 0.611 |
| 17 | 1 | 1 | 100(Ethanol) | 0.14 (Nitric acid) | 0.5 | - | - | Nickel nitrate | 0.611 |
| 18 | 1 | 1 | 100(Ethanol) | 0.14 (Nitric acid) | 0.5 | - | - | Nickel nitrate | 0.611 |
| 19 | 1 | 1 | 100(Ethanol) | 0.14 (Nitric acid) | 0.5 | - | - | Nickel acetate | 0.611 |
| 20 | 1 | 1 | 100(Ethanol) | 0.14 (Nitric acid) | 0.5 | - | - | Nickel acetyl acetonato | 0.611 |
| 21 | 1 | 1 | 100(Ethanol) | 0.14 (Nitric acid) | 0.5 | - | - | Nickel chloride | 0.611 |

(continued)

Table 2-1 Catalyst preperation

Method of manufacturing catalyst (1)

| Manufacturing method | Preparing mixed solution of metal alkoxide of titanium and zirconium (Amount of mixture) | | | Producing of first precursor sol (A) | | Addition of silicon | | Addition of catalytic active metal salt | |
|---|---|---|---|---|---|---|---|---|---|
| | | | Solvent | First hydrolysis | | | | | |
| | Metal alkoxide of titanium | Metal alkoxide of zirconium | Amount of mixture and kinds | Catalyst to be used (Acidic or basic) | Amount of addition of water (mol) | Kinds of silicon | Amount of addition (mol) | Kinds of metal salts | Amount of addition (mol) |
| 25 | 1 | 1 | 100(Ethanol) | 0.14 (Nitric acid) | 0.5 | - | - | Nickel nitrate | 1.48 |
| 26 | 1 | 1 | 100(Ethanol) | 0.14 (Nitric acid) | 0.5 | - | - | Nickel nitrate | 0.035 |
| 27 | 1 | 1 | 100(Ethanol) | 0.14 (Nitric acid) | 0.5 | - | - | Nickel nitrate | 2.307 |
| 28 | 1 | 1 | 100(Ethanol) | 0.14 (Nitric acid) | 0.5 | - | - | Nickel nitrate | 0.017 |
| 29 | 1 | 1 | 100(Ethanol) | 0.14(Nitric acid) | 0.5 | Tetraethoxy silane | 0.002 | Nickel nitrate | 0.611 |
| 30 | 1 | 1 | 100(Ethanol) | 0.14(Nitric acid) | 0.5 | Tetraethoxy silane | 0.01 | Nickel nitrate | 0.611 |
| 31 | 1 | 1 | 100(Ethanol) | 0.14(Nitric acid) | 0.5 | Tetraethoxy silane | 0.1 | Nickel nitrate | 0.611 |
| 32 | 1 | 1 | 100(Ethanol) | 0.14(Nitric acid) | 0.5 | Tetraethoxy silane | 0.1 | Nickel nitrate | 0.611 |
| 33 | 1 | 1 | 100(Ethanol) | 0.14 (Nitric acid) | 0.5 | Tetraethoxy silane | 0.4 | Nickel nitrate | 0.611 |
| 34 | 1 | 1 | 100(Ethanol) | 0.14 (Nitric acid) | 0.5 | Tetraethoxy silane | 0.6 | Nickel nitrate | 0.611 |

[Table 2-2]

Table 2-2 Catalyst preperation
Method of manufacturing catalyst (1)

| Manufacturing method | Addition of rare earth | | Producing of second precursor sol (B) | Drying | First heat treatment | | | Second heat treatment | | |
|---|---|---|---|---|---|---|---|---|---|---|
| | Kinds of rare earth salts | Amount of addition (mol %) | Second hydrolysis<br>Amount of addition of water (mol) | Temperature °C | Oxidizing atmosphere<br>Oxygen concentration | Tempetarure | Hrs. | Reducing atmosphere<br>Hydrogen concentration | Tempetarure | Hrs. |
| 1 | | | 3.5 | 120 | 21% | 700°C | 1 | 20% | 600°C | 5 |
| 2 | Yttrium nitrate | 3.055 | 3.5 | 120 | 21% | 700°C | 1 | 20% | 600°C | 5 |
| 3 | Lanthanum nitrate | 3.055 | 3.5 | 120 | 21% | 700°C | 1 | 20% | 600°C | 5 |
| 4 | Cerium nitrate | 3.055 | 3.5 | 120 | 21% | 700°C | 1 | 20% | 600°C | 5 |
| 5 | Prseodymium nitrate | 3.055 | 3.5 | 120 | 21% | 700°C | 1 | 20% | 600°C | 5 |
| 6 | Yttrium nitrate and lanthanum nitrate | 1.52/1.52 | 3.5 | 120 | 21% | 700°C | 1 | 20% | 600°C | 5 |
| 7 | Cerium nitrate | 61.1 | 3.5 | 120 | 21% | 700°C | 1 | 20% | 600°C | 5 |
| 8 | Cerium nitrate | 122.2 | 3.5 | 120 | 21% | 700°C | 1 | 20% | 600°C | 5 |
| 9 | Cerium nitrate | 0.3055 | 3.5 | 120 | 21% | 700°C | 1 | 20% | 600°C | 5 |
| 10 | Cerium chloride | 0.0611 | 3.5 | 120 | 21% | 700°C | 1 | 20% | 600°C | 5 |
| 11 | - | - | 3.5 | 120 | 21% | 600°C | 1 | 20% | 600°C | 5 |
| 12 | - | - | 3.5 | 120 | 21% | 700°C | 1 | 20% | 600°C | 5 |
| 13 | - | - | 3.5 | 120 | 21% | 700°C | 1 | 20% | 600°C | 5 |

(continued)

Table 2-2 Catalyst preperation
Method of manufacturing catalyst (1)

| Manufacturing method | Addition of rare earth | | Producing of second precursor sol (B) | Drying | First heat treatment | | | Second heat treatment | | |
|---|---|---|---|---|---|---|---|---|---|---|
| | Kinds of rare earth salts | Amount of addition (mol %) | Second hydrolysis<br>Amount of addition of water (mol) | Temperature °C | Oxidizing atmosphere<br>Oxygen concentration | Tempetarure | Hrs. | Reducing atmosphere<br>Hydrogen concentration | Tempetarure | Hrs. |
| 14 | - | - | 3.5 | 120 | 21% | 700°C | 1 | 20% | 600°C | 5 |
| 15 | - | - | 3.5 | 120 | 21% | 700°C | 1 | 20% | 600°C | 5 |
| 16 | - | - | 3.5 | 120 | 21% | 700°C | 1 | 20% | 600°C | 5 |
| 17 | - | - | 3.5 | 120 | 21% | 800°C | 1 | 20% | 600°C | 5 |
| 18 | - | - | 3.5 | 120 | 21% | 1300°C | 1 | 20% | 600°C | 5 |
| 19 | - | - | 3.5 | 120 | 21% | 700°C | 1 | 20% | 600°C | 5 |
| 20 | - | - | 3.5 | 120 | 21% | 700°C | 1 | 20% | 600°C | 5 |
| 21 | - | - | 3.5 | 120 | 21% | 700°C | 1 | 20% | 600°C | 5 |
| 25 | - | - | 3.5 | 120 | 21% | 700°C | 1 | 20% | 600°C | 5 |
| 26 | - | - | 3.5 | 120 | 21% | 700°C | 1 | 20% | 600°C | 5 |
| 27 | - | - | 3.5 | 120 | 21% | 700°C | 1 | 20% | 600°C | 5 |
| 28 | - | - | 3.5 | 120 | 21% | 700°C | 1 | 20% | 600°C | 5 |
| 29 | - | - | 3.5 | 120 | 21% | 700°C | 1 | 20% | 600°C | 5 |
| 30 | - | - | 3.5 | 120 | 21% | 700°C | 1 | 20% | 600°C | 5 |
| 31 | - | - | 3.5 | 120 | 21% | 700°C | 1 | 20% | 600°C | 5 |
| 32 | - | - | 3.5 | 120 | 21% | 700°C | 1 | 20% | 600°C | 5 |
| 33 | - | - | 3.5 | 120 | 21% | 700°C | 1 | 20% | 600°C | 5 |

(continued)

Table 2-2 Catalyst preperation

Method of manufacturing catalyst (1)

| Manufacturing method | Addition of rare earth | | Producing of second precursor sol (B) | Drying | First heat treatment | | | Second heat treatment | | |
|---|---|---|---|---|---|---|---|---|---|---|
| | Kinds of rare earth salts | Amount of addition (mol %) | Second hydrolysis<br>Amount of addition of water (mol) | Temperature °C | Oxidizing atmosphere<br>Oxygen concentration | Tempetarure | Hrs. | Reducing atmosphere<br>Hydrogen concentration | Tempetarure | Hrs. |
| 34 | - | - | 3.5 | 120 | 21% | 700°C | 1 | 20% | 600°C | 5 |

[Table 3]

Table 3 Catalyst preperation

Method of manufacturing catalyst (2)

| Manufacturing method | Preparing mixed solution of metal alkoxide of titanium and zirconium (Amount of mixture) | | | Producing of first precursor sol (A) | | Producing of second precursor sol (C) | Addition of catalytic active metal salt | | Drying | First heat treatment | | | Second heat treatment | | |
|---|---|---|---|---|---|---|---|---|---|---|---|---|---|---|---|
| | Metal alkoxide of titanium | Metal alkoxide of zirconium | Solvent | First hydrolysis | | Second hydrolysis | Kinds of metal salts | Amount of addition (mol) | Temperature °C | Oxidizing atmosphere | Temperature | Hrs. | Reducing atmosphere | Temperature | Hrs. |
| | | | Amount of mixture and kinds | Catalyst (Acidic or basic) | Amount of addition of water (mol) | Amount of addition of water (mol) | | | | Oxygen concentration | | | Hydrogen concentration | | |
| 22 | 1 | 1 | 100(Ethanol) | 0.14 (Nitric acid) | 0.5 | 3.5 | Nickel nitrate | 0.611 | 120 | 21% | 700°C | 1 | 20% | 600°C | 5 |

[Table 4]

Table 4 Catalyst preperation

Method of manufacturing catalyst (3)

| Manufacturing method | Preparing mixed solution of metal alkoxide of titanium and zirconium (Amount of mixture) | | | Producing of first precursor sol (A) | | Producing of second precursor sol (C) | Drying | First heat treatment | | | Addition of catalytic active metal salt | | | Second heat treatment | | |
|---|---|---|---|---|---|---|---|---|---|---|---|---|---|---|---|---|
| | Metal alkoxide of titanium | Metal alkoxide of zirconium | Solvent | First hydrolysis | | Second hydrolysis | Temperature °C | Oxidizing atmosphere | Temperature | Hrs. | Metal salt | | Kinds of solvents and amount of addition | Reducing atmosphere | Temperature | Hrs. |
| | | | Amount of mixture and kinds | Catalyst to be used (Acidic or basic) | Amount of addition of water (40% or less) (mol) | Amount of addition of water (mol) | | Oxygen concentration | | | Kinds | Amount of addition (mol) | | Hydrogen concentration | | |
| 23 | 1 | 1 | 100(Ethanol) | 0.14 (Nitric acid) | 0.5 | 3.5 | 120 | 21% | 700°C | 1 | Nickel nitrate | | Ethanol / 25 | 20% | 600°C | 5 |
| 24 | 1 | 1 | 100(Ethanol) | 0.14 (Nitric acid) | 0.5 | 3.5 | 120 | 21% | 700°C | 1 | – | 0 | – | 20% | 600°C | 5 |

Manufacturing of Catalyst for Producing Hydrogen

1. Outline of Method of Manufacturing Catalyst for Producing Hydrogen in Tables 2-1 and 2-2

The alkoxide of each of titanium tetraisopropoxide (the metal alkoxide of titanium) and zirconium tetranormalbutoxide (the metal alkoxide of zirconium), which were used in the mol ratio shown in Table 2-1, was diluted in the mol ratio of alkoxide to ethanol of 1 to 25. For the purpose of suppressing the reactivity of the alkoxides, chelating agent such as acetyl acetone may be added in 0.1 to 2 mol with respect to 1 mol of each alkoxide. The amount of solvent used, as shown in Table 2-1, and Table 3 and Table 4 to be described later, indicates the total amount (mol) of the solvent at the time of preparing sol.

The above two alkoxide solutions were mixed and stirred, so that the two types of alkoxides can be mixed together in the alcohol solvent. A solution containing 0.5 mol of water (12.5% by mass of the total amount of water) and 0.14 mol of nitric acid, each being expressed in mol ratio to the alkoxide as shown in Table 2, was added and mixed to prepare a precursor sol (A) as being partially hydrolyzed complex sol.

When silicon was added, tetraethoxy silane or tetramethoxy silane was added in the mol ratio as shown in Table 2. As an active component of the catalyst for producing hydrogen, 0.61 mol of Ni salt as shown in Table 2, was added and stirred to the sum of 2 mol of the alkoxides in the table. At this timing, in the catalysts of Samples Nos. 8 to 16, to which a rare earth element was to be added, a predetermined amount (namely the mol ratio to the catalytic active metal) of a rare earth salt as shown in Table 2 was added and stirred.

After sufficient stirring in the partially hydrolyzed state, 3.5 mol of water (87.5% by mass of the total amount of water) was further added and stirred together with 50 mol of ethanol, thereby obtaining a precursor sol (B). The precursor sol (B) was then stirred at room temperature for 24 hours. Thereafter, using a heater such as a hot stirrer of 120°C, the solvent was removed to obtain powder. The powder was burned at 700°C for one hour, and then pulverized with a mortar. This was press-formed at 528kg/cm$^2$, and then completed in the grain size of 180 to 250μm. Using a $H_2/N_2$ mixed gas containing 20% of $H_2$, a reduction process was carried out at 600°C for five hours, resulting in the catalyst for producing hydrogen (Samples Nos. 1 to 18, 21 to 23 and 25 to 34 in Table 1).

2. Outline of Table 3

The alkoxide of each of titanium tetraisopropoxide and zirconium tetranormalbutoxide, which were used in the mol ratio shown in Table 3, was diluted in the mol ratio of alkoxide to ethanol of 1 to 25. For the purpose of suppressing the reactivity of the alkoxides, chelating agent such as acetyl acetone may be added in 0.1 to 2 mol with respect to 1 mol of each alkoxide.
The above two alkoxide solutions were mixed and stirred, so that the two types of the alkoxides can be mixed together in the alcohol solvent. A solution containing 0.5 mol of water (12.5% by mass of the total amount of water) and 0.14 mol of nitric acid was added and mixed to prepare a precursor sol (A) as being partially hydrolyzed complex sol.
After sufficient stirring in the partially hydrolyzed state, 3.5 mol of water (87.5% by mass of the total amount of water) was further added and stirred together with 50 mol of ethanol, thereby obtaining a precursor sol (C). As an active component of the catalyst for producing hydrogen, 0.61 mol of Ni nitrate was added and stirred to the sum of 2 mol of the alkoxides. The precursor sol (C) after adding the nickel nitrate was stirred at room temperature for 24 hours. The solvent was then removed therefrom by using a heater such as a hot stirrer of 120°C. After burning at 700°C in the atmosphere for one hour, this was pulverized with a mortar and press-formed at 528kg/cm$^2$, and then completed in a formed size of 180 to 250$\mu$m. Using a $H_2/N_2$ mixed gas containing 20% of $H_2$, a reduction process was carried out at 600°C for five hours, resulting in the catalyst for producing hydrogen (Sample No. 19 in Table 1).

3. Outline of Table 4

The alkoxide of each of titanium tetraisopropoxide and zirconium tetranormalbutoxide, which were used in the mol ratio shown in Table 4, was diluted in the mol ratio of alkoxide to ethanol of 1 to 25. For the purpose of suppressing the reactivity of the alkoxides, chelating agent such as acetyl acetone may be added in 0.1 to 2 mol with respect to 1 mol of each alkoxide.
The above two alkoxide solutions were mixed and stirred, so that the two types of the alkoxides can be mixed together in the alcohol solvent. A solution containing 0.5 mol of water (12.5% by mass of the total amount of water) and 0.14 mol of nitric acid was added and mixed to prepare a precursor sol (A) as being partially hydrolyzed complex sol.
After sufficient stirring in the partially hydrolyzed state, 3.5 mol of water (87.5% by mass of the total amount of water) was further added and stirred together with 50 mol of ethanol, thereby obtaining a precursor sol (C). After the precursor sol (C) was stirred at room temperature for 24 hours, the solvent was removed therefrom by using a heater such as a hot stirrer of 120°C. Thereafter, burning was carried out at 700°C in the atmosphere, thereby obtaining a porous ceramics composed of titania-zirconia.
The obtained porous body was pulverized with a mortar. As an active component of the catalyst for producing hydrogen, 0.61 mol of Ni nitrate diluted with 25 mol of ethanol was added and stirred to the sum of 2 mol of the alkoxides. After sufficient stirring, the solvent was removed by using a heater such as a hot stirrer of 120°C, and then burned again at 700°C in the atmosphere. This was press-formed at 528kg/cm$^2$ and completed in the grain size of 180 to 250$\mu$m. Using a $H_2/N_2$ mixed gas containing 20% of $H_2$, a reduction process was carried out at 600°C for five hours, resulting in the catalyst for producing hydrogen (Samples Nos. 20 and 24 in Table 1).

Activity Evaluation

4. Outline of Tables 1-1 and 1-2

Measurements of BET Specific Surface Area and Micro-Hole Diameter Distribution

The BET specific surface area was measured by $N_2$ gas absorption, and the micro-hole diameter distribution was measured by Dollimore-Heal analysis with the gas absorption method ("BELSORP-mini2" manufactured by BEL Japan, Inc.).

Measurement of Grain Size of Active Metal

In the XRD analysis in which Cuka was used as an X-ray source and made in the range of 2$\theta$ of 10 to 80°, the Ni crystallite size on the Ni(111) plane after hydrogen reduction process was obtained from Scherrer equation. The obtained value was used as an Ni grain size.

Degree of Metal Exposure

The degree of metal exposure was measured as follows. The following description will be made of Sample No.

1. This is true for other samples.

[Table 5]

Table 5 Evaluation of degree of metal exposure

Pretreatment and measured value of measuring degree of metal salt exposure on the surface of porous body

| Degree of metal exposure / Pretreatment step / Example | Heat treatment condition 1 | | Degree of metal exposure a% | Heat treatment condition 2 | | Degree of metal exposure b% |
|---|---|---|---|---|---|---|
| | Oxidizing atmosphere | Hydrogen gas atmosphere | | Oxidizing atmosphere | Hydrogen gas atmosphere | |
| | Oxygen concentration and tempetature time | Hydrogen concentration and tempetature | | Oxygen concentration and tempetature | Hydrogen concentration and tempetature | |
| Sample No. 1 | 21% / 400°C | 100% / 800°C | 0% | 21% / 400°C | 100% / 400°C | 1.28% |

Measuring method of degree of metal exposure: The degree of metal exposure is calculated by 100 X the mol ratio which is obtained by dividing the number of moles of the hydrogen atoms absorbed at normal temperature by the number of moles of metal in the catalyst for producing hydrogen used in the measurement.

That is, 0.2g of the catalyst manufactured as shown in Table 5 was heat treated in an oxidizing atmosphere at 400°C, so that nickel was transformed into nickel oxide. After the heat treatment in a hydrogen gas atmosphere at 800°C, the temperature was lowered to room temperature in an Ar atmosphere, and the degree of metal exposure was measured at room temperature.

In the measurement of the degree of metal exposure, a constant amount of $H_2$, namely $2.9\times10^{-5}$ mol, was supplied to the catalyst by using Ar as a support gas, so that hydrogen was absorbed into the nickel of the catalyst. Using a gas chromatograph ("GC-8A" manufactured by Shimadzu Corporation), the amount of hydrogen to be absorbed was obtained by analyzing the amount of hydrogen not absorbed into the catalyst to be discharged from the outlet of the measuring instrument, with respect to the amount of the supplied hydrogen.

The supply of $H_2$ pulse was repetitively operated until the amount of hydrogen discharged was equal to the amount of hydrogen supplied. The degree of metal exposure was obtained by dividing the number of moles of the absorbed hydrogen atoms obtainable from the above repetitive operation by the number of moles of nickel in the catalyst used in the measurement.

Next, the temperature was raised again to 400°C, and heat treatment was carried out in the oxidizing atmosphere, so that nickel was changed into nickel oxide. Subsequently, heat treatment was carried out in the hydrogen gas atmosphere at 400°C, and thereafter the temperature was lowered to room temperature in the Ar atmosphere. In the same procedure as the above method of measuring the degree of metal exposure, the degree of metal exposure was measured at room temperature.

The obtained degrees of metal exposure were expressed as "a%" and "b%" as shown in Table 5, respectively. When the interaction between the support and the catalytic active metal was strong, strong metal support interaction (SMSI) effect was observed. In the catalyst exhibiting the SMSI effect, the support was covered with the catalytic active metal in the hydrogen reduction at a high temperature. It is known that on the support side in the vicinity of the boundary between the catalytic active metal and the support, an oxygen-defect occurs, reducing the number of metals on the support side. Since in the oxygen-defect, the incoming and outgoing of oxygen occur frequently, the carbon absorbed in the vicinity of the boundary between the catalytic active metal and the support can be oxidized and gasified. Therefore, the catalyst having SMSI structure is effective in suppressing coking. The evaluation based on the abovementioned degree of metal exposure is effective in confirming the SMSI structure. That is, it can be expected that in the catalyst having the SMSI effect, the catalytic active metal is covered with the support in the hydrogen reduction at a high temperature, thereby reducing the degree of metal exposure. Hence, in the catalyst having the SMSI effect, the relationship between the abovementioned a% and b% is usually a>b.

To make the activity evaluation, the manufactured catalyst for producing hydrogen was held vertically by glass wool in a reaction tube made of Inconel, which was subjected to calorizing treatment and had an outer diameter Ø10mm. The temperature during the reaction was monitored by disposing a thermocouple for measuring the reaction temperature at the location of the catalyst for producing hydrogen. The reaction tube was arranged so that its longitudinal direction was perpendicular to the ground. The method of supplying a reaction gas was an up-flow manner in which the reaction gas was supplied from below the reaction tube. The reaction test was conducted under auto-thermal reaction condition where steam reforming and partial oxidizing reaction were carried out at the same time. The supply gas flow rates were as follows. That is, n-$C_4H_{10}$ was 20ml/min, Ar was 140ml/min, $N_2$ was 20ml/min, $O_2$ was 40ml/min, and $H_2O$ was 80ml/min.

[Formula 1]

Steam Reforming Reaction

$$n\text{-}C_4H_{10}+4H_2O\leftrightarrow 4CO+9H_2 \quad \Delta H293=650.8kJ/mol$$

Partial Oxidizing Reaction

$$n\text{-}C_4H_{10}+2O_2 = 4CO+5H_2 \quad \Delta H293=-316.5kJ/mol$$

Auto-Thermal Reaction

$$n\text{-}C_4H_{10}+4H_2O+2O_2\leftrightarrow 4CO_2+9H_2 \quad \Delta H293=-481.2kJ/mol$$

The reaction temperature was 465°C, and the reaction pressure was 0.01MPa. The gas composition of inorganic gas was analyzed by a gas chromatograph of TCD type ("GC-8A" manufactured by Shimadzu Corporation). The gas analyses of CO, $CO_2$ and other organic gas were made by passing it through a methane reduction device ("MTN-1" manufactured by Shimadzu Corporation), and analyzed by a gas chromatograph of FID type ("GC-14B" manufactured by Shimadzu Corporation). Using $N_2$ as an internal standard gas, the conversion ratio of n-butane was calculated by the following equation.

[Equation 1]

$$n\text{-}C_4H_{10}\text{ conversion ratio (\%)} = \frac{(n\text{-}C_4H_{10}\text{ volume concentration at reaction tube inlet}) - (n\text{-}C_4H_{10}\text{ volume concentration at reaction tube outlet} \times \alpha)}{n\text{-}C_4H_{10}\text{ volume concentration at reaction tube inlet}} \times 100$$

$$\alpha = \frac{N_2\text{ volume concentration at reaction tube inlet}}{N_2\text{ volume concentration at reaction tube outlet}}$$

The rate of change was obtained by the ratio of the value obtained by subtracting the conversion ratio after 10 hours since the reaction was started, from the conversion ratio after one hour since the reaction was started, and the conversion ratio after one hour since the reaction was started. Besides the activity of the catalyst, the stability of the activity is also extremely important. The stability of the catalyst activity can be confirmed by measuring the rate of change.

The carbon deposition ratio was obtained by the ratio of the amount of carbon deposition to the amount of the catalyst used in the evaluation. The amount of carbon deposition was obtained by TPO (temperature programmed oxidation) measurement, in which the carbon absorbed into the catalyst was oxidized into CO and $CO_2$, followed by quantitative analysis. The TPO measurement was made as follows. That is, a predetermined amount of the catalyst (0.05g) after the reaction test was set in a quartz glass tube so that both sides were sandwiched with quartz wool. While raising the temperature of the catalyst in the quartz glass tube at 10°C/min, oxygen gas was supplied until the temperature was 900°C. The amount of carbon deposition was obtained by methanating the released CO and $CO_2$ with a methane reduction device ("MTN-1" manufactured by Shimadzu Corporation), and making the quantitative analysis of methane with the gas chromatograph of FID type ("GC-14B" manufactured by Shimadzu Corporation).

In the above reaction test, the auto-thermal reaction was used as an index in order to learn the catalyst activity. Alternatively, the steam reforming reaction or the partial oxidizing reaction may be used to make evaluations. That is, the use of the catalyst of the invention is not limited to the auto-thermal reaction.

Table 1 shows the material composition, the micro-hole diameter distribution, the BET specific surface area, the Ni grain size obtained by making the XRD analysis before reduction process, and calculating from the Scherrer equation, and the conversion ratio and the rate of change in the n-butane auto-thermal reaction.

From Table 1, it can be seen that in the examples of the invention, namely Samples Nos. 1 to 4, 8 to 13, 15 to 17, 19 to 22, 25 and 29 to 33 achieved not less than 80% in the reaction ratio (the conversion ratio) of n-butane, exhibiting high activity. Further, in Sample No. 2 burned at 600°C, the support was the amorphous material and nickel oxide was also the amorphous material, exhibiting high BET specific surface area. This proves that the nickel oxide was highly dispersed.

On the other hand, other catalytic support burned at 700°C exhibited a crystal phase. Specifically, in all samples other than Sample No. 2 being the amorphous material, and Samples Nos. 6 and 7 composed of a single composition, the crystal phase of $ZrTiO_4$ as a composite oxide was observed. It can be therefore estimated that the manufacturing by the sol-gel method enables titanium and zirconium to be uniformly dispersed. It can also be found that the BET specific surface area is decreased with increasing the composition ratio of the single component of titanium and zirconium, respectively. For example, in the support consisting only of titania in Sample No. 7, the BET specific surface area thereof was extremely low, namely $6.4m^2/g$. This proves that the composite of titania and zirconia achieved a high specific surface area.

As the specific surface area is decreased, the dispersibility of nickel is deteriorated, resulting in the increased nickel grain size. This tendency is more remarkable in titania. This seems to be due to the manufacturing steps by the sol-gel method, including the stability of the alkoxides, and the like.
In terms of coking, a comparison of the carbon deposition ratio of Samples Nos. 1, 3, 4, 5, 6 and 7 indicates that the composite of titanium oxide and zirconium oxide produces the effect of suppressing carbon deposition.

In Sample No. 18 burned at 1300°C, the porous body of the support was densified by burning, and the BET specific surface area was lowered. In terms of the conversion ratio and the rate of change, Samples Nos. 8 to 13, 15 and 16 had a slight decrease by the addition of the rare earth element, causing no significant change. However, in terms of the amount of carbon deposition, the catalyst of Samples Nos. 8 to 16, to which the rare earth element was added, had a small carbon deposition ratio. This seems to be because the added rare earth element covered the acid site of the catalyst, thereby improving coking resistance.

In terms of the amount of addition of the rare earth element, a suitable amount exists because, as shown in Sample No. 14, its excessive amount may cover the Ni surface, resulting in a deterioration of activity. Similarly, Samples Nos. 30 to 33, to which silicon was added, had a small carbon deposition ratio. The reason for this can be considered that the addition of silicon caused a change in the acid site and the base site, thereby improving coking resistance, and that the increased specific surface area reduced the Ni crystallite size, thereby stabilizing activity. Sample No. 29, to which a small amount of silicon was added, showed no difference from Sample No. 1 containing no silicon. In Sample No. 34, to which a large amount of silicon was added, Ni was oxidized and the activity was deteriorated during the activity evaluation, resulting in the increased rate of change.

Samples Nos. 21 and 22, in which instead of nickel nitrate, nickel acetate or nickel acetyl acetonato was transformed into nickel salt, exhibited the characteristic close to that obtained by using the nickel nitrate. On the other hand, Sample No. 23, in which nickel chloride was transformed into nickel salt, had a large micro-hole diameter distribution and a low conversion ratio. The reason for this can be considered that due to the low BET specific surface area, the nickel salt adversely affected on the support in the sol-gel step.

Samples Nos. 19 and 20 employing different manufacturing methods had no significant difference in the catalytic characteristics from Sample No. 1, and both methods achieved suitable catalyst manufacturing.

In terms of the amount of Ni addition, Sample No. 27, to which 40wt% of Ni was added, had a larger grain size and a larger amount of carbon deposition than those having another amount of addition. As a result, the deposited carbon blocked the flow passage and hence the supply gas flow was unstable, failing to make activity evaluation after 10 hours. In the initial activity, the activity reached an equilibrium reaction ratio when the amount ofNi addition was 15wt%. No improvement of activity can be expected by further increasing the amount of addition thereof. Samples Nos. 26 and 28, to which a small amount of the catalyst was added, had the obvious deterioration of activity and exhibited little activity at 0.5wt%.

## Claims

1. A catalyst for producing hydrogen comprising a porous body, as a support, comprising either one of an amorphous phase oxide and a composite oxide containing titanium and zirconium in which titanium has a mol ratio of 5 to 75% and zirconium has a mol ratio of 25 to 95% to the sum of these two, the porous body having a micro-hole diameter distribution peak in the range of 3 nm to 30 nm; and
catalytic active metal grains carried on the a gas contact surface of the support, and the catalytic active metal has a content of 1 to 30% by mass with respect to the sum of the porous body and the catalytic active metal.

2. The catalyst for producing hydrogen according to claim 1, wherein the porous body contains a rare earth element at a range of 0.1 to 100.0 % in mol ratio with respect to the catalytic active metal.

3. The catalyst for producing hydrogen according to claim 1, wherein the porous body contains silicon at a range of 0.5 to 20.0% in mol ratio to the sum of the titanium and the zirconium.

4. The catalyst for producing hydrogen according to any one of claims 1 to 3, wherein the catalytic active metal is nickel.

5. The catalyst for producing hydrogen according to any one of claims 1 to 4, wherein the catalytic active metal is granular having a grain size of 45nm or less.

6. The catalyst for producing hydrogen according to claim 2, wherein the rare earth element is at least one selected from Y, La, Ce and Pr.

7. A method of manufacturing a catalyst for producing hydrogen comprising the steps of:

   obtaining a mixed solution by mixing metal alkoxide of titanium and metal alkoxide of zirconium together with solvent;
   preparing a precursor sol (A) in which the metal components of the added metal alkoxide of titanium and the metal alkoxide of zirconium are partially solated by hydrolyzing the mixed solution by adding a hydrolytic catalyst and water to the mixed solution;
   adding a metal salt serving as an active ingredient of the catalyst for producing hydrogen to the mixed solution containing the precursor sol (A);

preparing a precursor sol (B) having, the remaining metal components of the added metal alkoxide of titanium and the metal alkoxide of zirconium by hydrolyzing the mixed solution by further adding water to the mixed solution; and

drying the precursor sol (B), followed by heat treatment in an oxidizing atmosphere and then heat treatment in a reducing atmosphere.

**8.** A method of manufacturing a catalyst for producing hydrogen comprising the steps of:

obtaining a mixed solution by mixing metal alkoxide of titanium and metal alkoxide of zirconium together with solvent;

preparing a precursor sol (A) in which the metal components of the added metal alkoxide of titanium and the metal alkoxide of zirconium are partially solated by hydrolyzing the mixed solution by adding hydrolytic catalyst and water to the mixed solution;

preparing a precursor sol (C) having, the remaining metal components of the added metal alkoxide of titanium and the metal alkoxide of zirconium by hydrolyzing the mixed solution by further adding water to the mixed solution containing the precursor sol (A);

adding and carrying metal salt serving as an active component of the catalyst for producing hydrogen to the precursor sol (C) so as to be carried thereon; and

drying the precursor sol (C), followed by heat treatment in an oxidizing atmosphere and then heat treatment in a reducing atmosphere.

**9.** A method of manufacturing a catalyst for producing hydrogen comprising the steps of:

obtaining a mixed solution by mixing metal alkoxide of titanium and metal alkoxide of zirconium together with solvent;

preparing a precursor sol (A) in which the metal components of the added metal alkoxide of titanium and the metal alkoxide of zirconium are partially solated by hydrolyzing the mixed solution by adding hydrolytic catalyst and water to the mixed solution;

preparing a precursor sol (C) having, the remaining metal components of the added metal alkoxide of titanium and the metal alkoxide of zirconium by hydrolyzing the mixed solution by further adding water to the mixed solution containing the precursor sol (A);

preparing a support by drying the precursor sol (C), followed by heat treatment in an oxidizing atmosphere; and

immersing the support in a metal salt solution serving as an active component of the catalyst for producing hydrogen, followed by heat treatment in an oxidizing atmosphere and then heat treatment in a reducing atmosphere.

**10.** The method of manufacturing a catalyst for producing hydrogen according to any one of claims 7 to 9, wherein the hydrolytic catalyst is at least one selected from nitric acid, hydrochloric acid, acetic acid, sulfuric acid, hydrofluoric acid and ammonia.

**11.** The method of manufacturing a catalyst for producing hydrogen according to any one of claims 7 to 10, wherein the metal salt is at least one selected from nickel nitride, nickel acetate and Ni acetyl acetonato.

**12.** The method of manufacturing a catalyst for producing hydrogen according to any one of claims 7 to 11, further comprising the step of adding a rare earth element to the mixed solution.

**13.** The method of manufacturing a catalyst for producing hydrogen according to any one of claims 7 to 11, further comprising the step of adding silicon to either one of the precursor sol (B) and the precursor sol (C).

**14.** A fuel reformer provided with the catalyst for producing hydrogen according to any one of claims 1 to 6.

**15.** A fuel cell provided with the fuel reformer according to claim 14.

Fig. 1

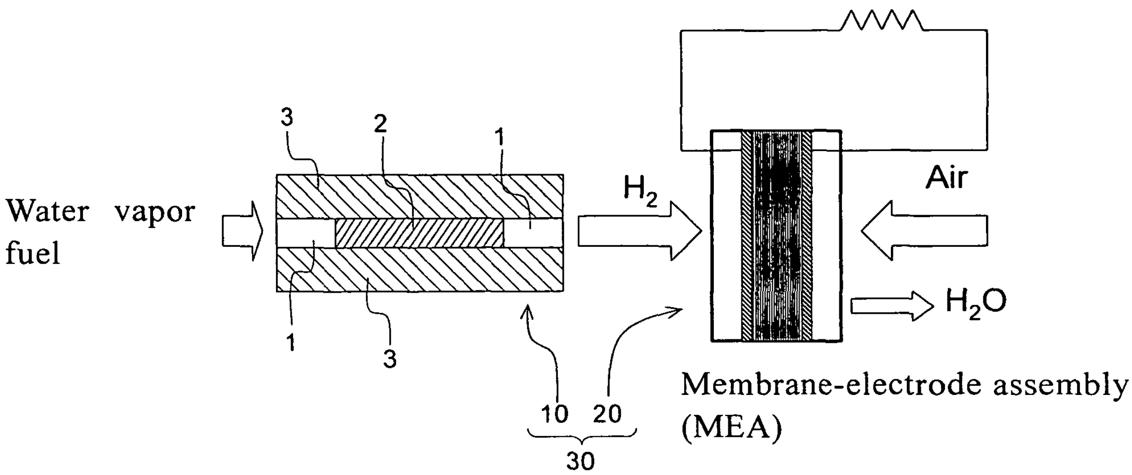
Water vapor fuel
3
2
1
1
3
10
20
30
$H_2$
Air
$H_2O$
Membrane-electrode assembly (MEA)

**INTERNATIONAL SEARCH REPORT**

International application No.
PCT/JP2006/320835

A. CLASSIFICATION OF SUBJECT MATTER
*B01J23/755*(2006.01)i, *B01J23/76*(2006.01)i, *B01J35/10*(2006.01)i, *B01J37/03*(2006.01)i, *C01B3/40*(2006.01)i, *H01M8/06*(2006.01)n

According to International Patent Classification (IPC) or to both national classification and IPC

B. FIELDS SEARCHED

Minimum documentation searched (classification system followed by classification symbols)
B01J23/755, B01J23/76, B01J35/10, B01J37/03, C01B3/40, H01M8/06

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
CAplus(STN), JSTPlus(JDream2)

C. DOCUMENTS CONSIDERED TO BE RELEVANT

| Category* | Citation of document, with indication, where appropriate, of the relevant passages | Relevant to claim No. |
|---|---|---|
| X<br><br>A | JP 2002-121006 A (Matsushita Electric Industrial Co., Ltd.), 23 April, 2002 (23.04.02), Par. Nos. [0006] to [0029] (Family: none) | 1-3,5,6,14,15<br>4,7-13 |
| A | JP 3-202151 A (Petroleum Energy Center), 03 September, 1991 (03.09.91), Claim 1; examples (Family: none) | 1-15 |
| A | JP 2004-57858 A (The Kansai Electric Power Co., Inc.), 26 February, 2004 (26.02.04), Examples (Family: none) | 1-15 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 04 December, 2006 (04.12.06) | 12 December, 2006 (12.12.06) |
| Name and mailing address of the ISA/ Japanese Patent Office | Authorized officer |
| Facsimile No. | Telephone No. |

Form PCT/ISA/210 (second sheet) (April 2005)

**INTERNATIONAL SEARCH REPORT**

International application No.
PCT/JP2006/320835

C (Continuation). DOCUMENTS CONSIDERED TO BE RELEVANT

| Category* | Citation of document, with indication, where appropriate, of the relevant passages | Relevant to claim No. |
|---|---|---|
| A | JP 2000-153157 A (Honda Motor Co., Ltd.), 06 June, 2000 (06.06.00), All descriptions & US 2003/148880 A1 | 1-15 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 8071421 A
- JP 3245850 A